# EUROPEAN PATENT SPECIFICATION

(11) **EP 3 099 155 B1**
(45) Date of publication and mention of the grant of the patent: **03.04.2019**
(21) Application number: 15701536.3
(22) Date of filing: 28.01.2015
(51) Int. Cl.: A01D 34/82

(54) **HEIGHT-ADJUSTABLE LAWNMOWER HANDLE**
HÖHENVERSTELLBARER RASENMÄHERGRIFF
GUIDON DE TONDEUSE À GAZON RÉGLABLE EN HAUTEUR

(30) Priority: 31.01.2014 IT MI20140136
(43) Date of publication of application: 07.12.2016
(73) Proprietor: Stiga S.p.A. in breve anche St. S.p.A., 31033 Castelfranco Veneto (TV) (IT)
(72) Inventor: BACCHIN, Gian Luca, 31033 Castelfranco Veneto (TV) (IT); BUSATO, Renato, 31023 S. Marco Resana (TV) (IT); PUPPIN, Marco, 30027 S. Dona' Di Piave (VE) (IT)
(74) Representative: Mittler, Andrea
(86) International application number: PCT/EP2015/051702
(87) International publication number: WO 2015/114003

(56) References cited:
- GB-A- 891 499
- US-A- 2 199 919
- US-A- 3 817 547
- US-A- 5 842 329
- US-A1- 2008 256 919

## Description

The present invention relates to a height-adjustable lawnmower handle.

Height-adjustable handles exist in the prior art, such as for example in GB-891499-A, where a height-adjustable lawnmower handle has an end connected to a body of a lawnmower by means of a first pin and an engaging bond pin. The first pin is arranged in a portion of the handle close to the end, while the bond pin is arranged at a certain length from the first pin towards the other end of the handle. The first pin is engaged with the body of the lawnmower. The bond pin is engaged in a first L-shaped element. Said first L-shaped element is connected to a second L-shaped element by means of a return spring and by means of other pins. Said return spring may pass from a working position to a resting position. The first and second L-shaped elements are connected to the body of the lawnmower by means of further pins. The first L-shaped element has a perforated surface with a through hole. The bond pin transversely penetrates into the through hole in a direction perpendicular to the surface of the first L-shaped element. A bolt with nut holds the bond pin so that it remains within the through hole without coming out completely. Said through hole has an upper portion and a lower portion. The upper portion of said through hole has four housings to maintain said bond pin of the lawnmower handle fastened. The return spring allows the bond pin to be maintained in one of said housings of the through hole when the spring is in the resting position. The lower portion of said through hole is curvilinear so that said bond pin may slide thereon when the return spring is in the working position. The height of the lawnmower handle is adjustable by raising the lawnmower handle so that the bond pin exits from one of the housings of the through hole and the return pin passes from the resting position to the working position. A rotary movement is then impressed while maintaining the spring in working position, by sliding the bond pin on the curvilinear surface of the lower portion of the through hole. Once another of said housings of the upper portion of the through hole is identified, the lawnmower handle is released so that the bond pin can be housed in another of said housings and the return spring can pass from a working position to a resting position. Disadvantageously, the terrain on which the lawn is mowed is often rough and when the lawnmower accidentally falls into a hole, it inadvertently and dangerously makes the return spring pass from the resting position to the working position, thus accidentally letting the bond pin out from one of said housings of the upper portion of the through hole, thus causing to lose grip of the handle of the lawnmower, which may accidentally escape, changing position in height and making cutting the lawn extremely difficult and dangerous.

US-2199919-A describes a height-adjustable lawnmower handle with an end connected to a body of the lawnmower by means of a pin and an engaging tip. The body of the lawnmower comprises a circular element with saw tooth circumference, the gap between the teeth identifies a housing for said engaging tip of the handle. The height of the handle may be adjusted by impressing an upward rotary movement to make the engaging tip pass from one housing of the circular element to the other. Disadvantageously, when the lawnmower accidentally falls into a hole, the handle inadvertently rotates upwards making the engaging tip of the handle inadvertently and dangerously exit from said housings of the circular element, thus causing to lose grip of the lawnmower handle which may accidentally escape, changing position in height and making mowing the lawn extremely difficult and dangerous. Moreover, in order to maintain the position of the handle inside the housings of the circular element, a user should disadvantageously always push the handle downwards to avoid inadvertently losing control of the lawnmower and risking that a front portion of the lawnmower could be raised due to a lever effect and does not even mow the lawn well.

US-2008/0256919 describes a height-adjustable lawnmower handle has an end attached pivotably to a body of a lawnmower by means of a first pin and an engaging bond pin engaged in a arc-shaped slot of the body. The bond pin has a lever to block the bond pin at one of multiple positions identified by the arc-shaped slot.

It is the object of the present invention to provide a lawnmower handle which can be simply adjustable in height, which allows a safe use of the lawnmower and which allows the lawn to be mowed in an optimal manner.

According to the invention, such an object is achieved by the features of claim 1.

These and other features of the present invention will become more apparent from the following detailed description of a practical embodiment thereof, shown by way of non-limitative example in the accompanying drawings, in which:
Figure 1 shows an outward side view of a height-adjustable lawnmower handle in a maximum height position and indicatively fitted on the lawnmower;
Figure 2 shows an outward side view of a height-adjustable lawnmower handle in a minimum height position and indicatively fitted on the lawnmower;
Figure 3 shows a side view towards the inner side of the height-adjustable lawnmower handle in Figure 1;
Figure 4 shows a side view towards the inner side of the height-adjustable lawnmower handle in Figure 2;
Figure 5 shows a top view of the lawnmower handle in Figure 3;
Figure 6 shows a top view of the lawnmower handle in Figure 4;
Figure 7 shows a section view taken along line VII-VII in Figure 5;
Figure 8 shows a section view taken along line VIII-VIII in Figure 6;
Figure 9 shows side view from the inner side of a bracket of the lawnmower handle.

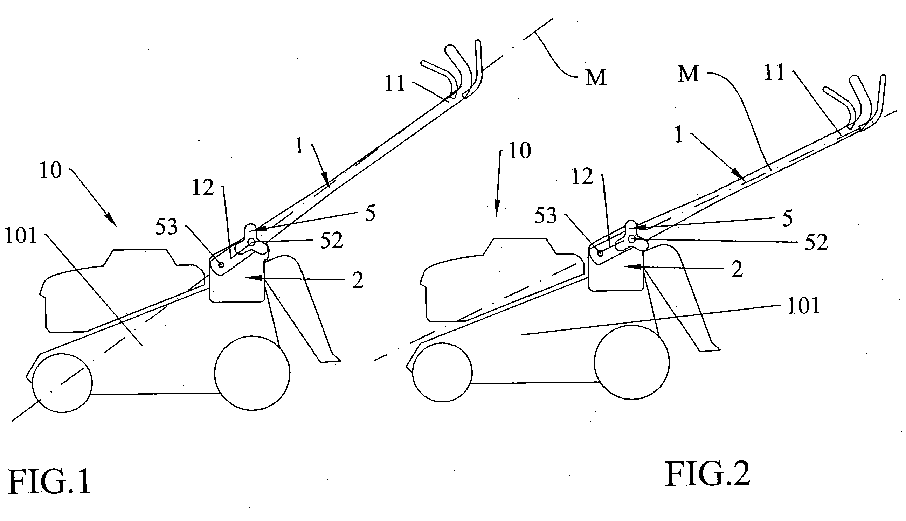

With reference to the above-listed figures, especially Figures 1 and 2, a handle 1 of a lawnmower 10 which expands its length along a longitudinal axis M is shown. Said handle 1 is height-adjustable and has an upper end 11 which can be gripped by a user and two lower ends 12 pivoted with a body 101 of lawnmower 10. The lower end 12 of handle 1 is connected to the body 101 of lawnmower 10 by means of a connection bracket 2.

The body 101 of lawnmower 10 comprises two of said connection brackets 2.

Figures 1 and 2 show only one of said connection brackets 2 - the left one - present on the left portion of the body 101 of lawnmower 10. The other of said connection brackets 2 - the right one - present on the right portion of the body 101 of lawnmower 10 is symmetric to the left connection bracket 2 and is thus mounted symmetrically on the body 101 of lawnmower 10.

Each of the two connection brackets 2 is connected to one of said lower ends 12 of handle 1, respectively, i.e. the left connection bracket 2 is connected to the lower left end 12 of handle 1, while the right connection bracket 2 is symmetrically connected to the lower right end 12 of handle 1.

The connection bracket 2 is integrally mounted to an upper portion of the body 101 of lawnmower 10 so that it can be easily and advantageously inspected by the user.

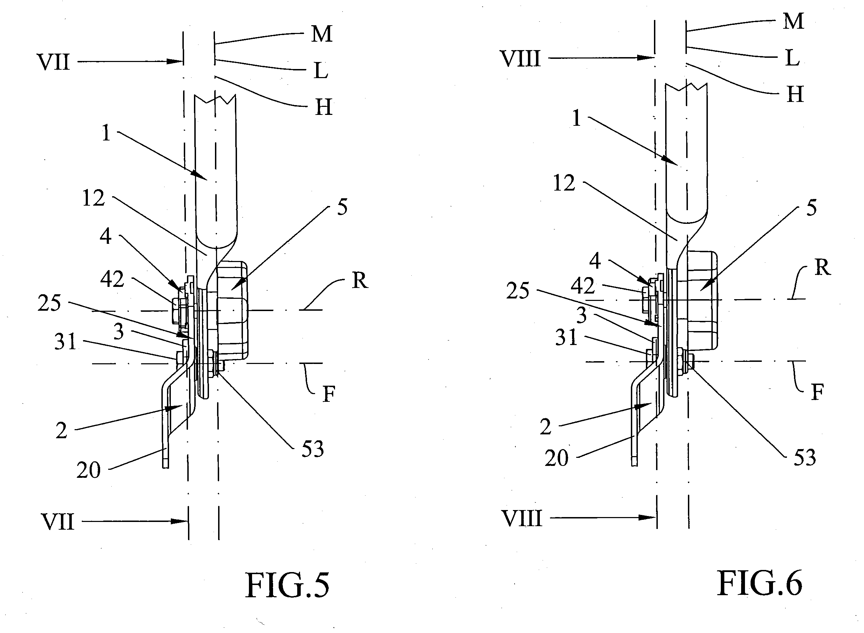

As shown in Figures 5, 6, 9, the connection bracket 2 comprises a lower connection portion 20 integrally engaged with the body 101 of lawnmower 10 and an upper portion 25 for integrally engaging the lower end 12 of handle 1.

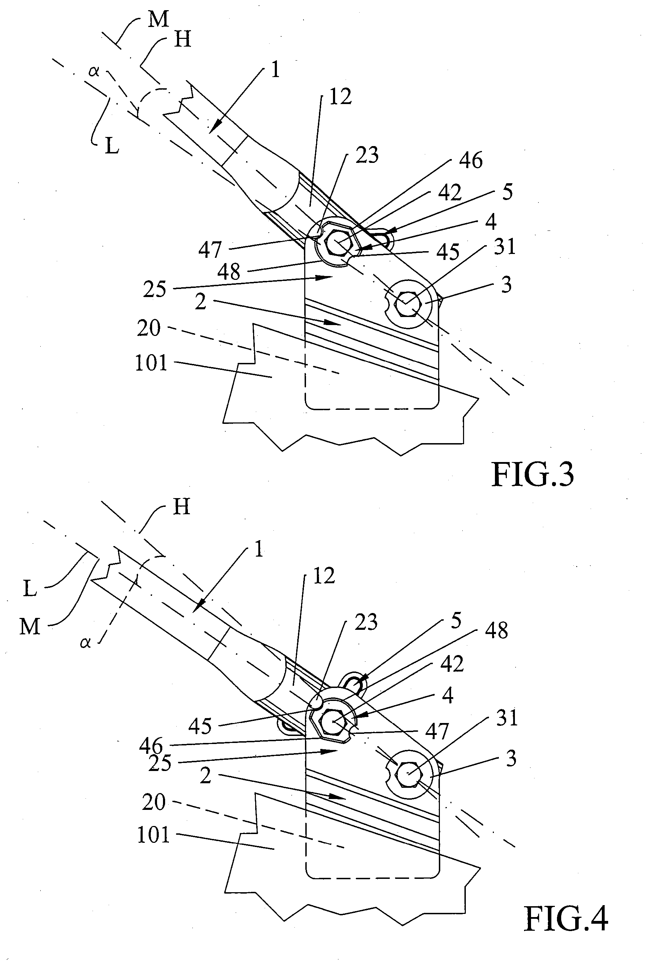

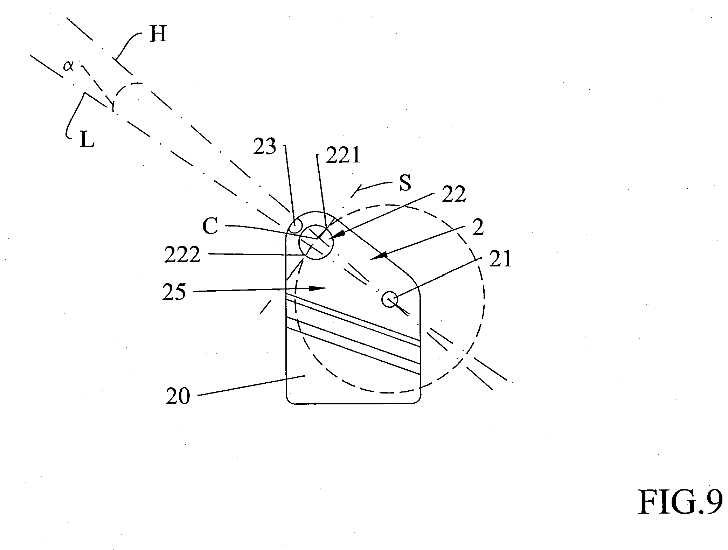

As shown in Figures 1-9, and especially in Figure 9, the upper portion 25 of the connection bracket 2 comprises a lower through hole 21 positioned towards the front side of lawnmower 10 and an upper through hole 22 positioned towards the back of lawnmower 10. Said upper through hole 22 is in a higher position than the lower through hole 21 so as to connect the lower end 12 of handle 1 in two locations which are sufficiently spaced apart from each other.

As shown in Figures 5-6, a first axis F crosses the lower through hole 21 and is perpendicular to a surface of the upper portion 25 of the connection bracket 2. A second axis R crosses the upper through hole 22 and is perpendicular to the surface of the upper portion 25 of the connection bracket 2.

First axis F and second axis R are both transversal to longitudinal axis M.

The diameter of the upper through hole 22 is greater than the diameter of the lower through hole 21.

A catch 23 raised towards the inner side of lawnmower 10 with respect to the surface of the upper portion 25 of the connection bracket 2 is present close to the upper through hole 22. Catch 23 is positioned in a location about the upper through hole 22 which intersects any one of the low L or high H longitudinal axes which pass through the lower through hole 21 and through the upper through hole 22.

At said through holes 21 and 22 of the connection bracket 2, handle 1 has two other through holes 13 and 14 of the lower end 12 of handle 1 (not shown in the figures).

The first through hole 13 of the lower end 12 of handle 1 is at the lower through hole 21 of the connection bracket 2, while the second through hole 14 of the lower end 12 of handle 1 is at the upper through hole 22.

The first and second through holes 13, 14 of handle 1 have a similar diameter and are positioned along the longitudinal axis M of handle 1.

First axis F and second axis R pass through the first 13 and the second 14 of said two through holes of the lower end 12 of handle 1, respectively.

As shown in Figure 5-6, the lower end 12 of handle 1 is rotatably connected to the connection bracket 2 by means of a fulcrum pin 31 which pivots following the direction of the first axis F from the inner side towards the outside of lawnmower 10.

By observing said fulcrum pin 31 along the first axis F from the inward side on the outside of lawnmower 10, said fulcrum pin 31 passes through a washer 3, then through the lower through hole 21 of the connection bracket 2 and through the first through hole 13 of the lower end 12 of handle 1. A lock nut 53 is provided to free the connection along the first axis F between the connection bracket 2 and the lower end 12 of handle 1. The diameter of the lower through hole 21 of the connection bracket 2 and the diameter of the first through hole 13 of the lower end 12 of handle 1 are similar and adapted to let the fulcrum pin 31 through and pivot.

The lower end 12 of handle 1 is also rotatably connected to the connection bracket 2 by means of a bond pin 42 which follows the direction of the second axis R.

By observing said bond pin 42 along the second axis R from the inside of lawnmower 10 outwards, said bond pin 42 passes through a through hole 44 of an eccentric washer 4, the upper through hole 22 of the connection bracket 2 and through the second through hole 14 of the lower end 12 of handle 1. A knob 5, which can be gripped by the user for screwing and blocking the bond pin 42 on the eccentric washer 4, is provided to free the connection between the connection bracket 2 and the lower end 12 of handle 1. Said knob 5 is present on the outward side of lawnmower 10 so as it can be advantageously inspected and maneuvered by the user.

Said eccentric washer 4 comprises the through hole 44 sized as the bond pin 42 so as to engage it and pivot it therein so that the eccentric washer 4 is rotatably connected to the bond pin 42. The through hole 44 of the eccentric washer is smaller than the upper through hole 22 of the connection bracket 2. The diameter of the through hole 44 of the eccentric washer 4 is about half the diameter of the upper through hole 22 of the connection bracket 2.

Said eccentric washer 4 comprises a first recess 45 and a second recess 47 on the outer surface thereof. Said first 45 and second 47 recesses can be engaged alternatively with the catch 23 of the connection bracket 2 by rotating the eccentric washer 4 about the second axis R by 180 sexagesimal degrees.

The use of the second recess 47 with catch 23 identifies a first position of engagement of the eccentric washer 4, while the use of the first recess 45 with catch 23 identifies a second position of engagement of the eccentric washer 4.

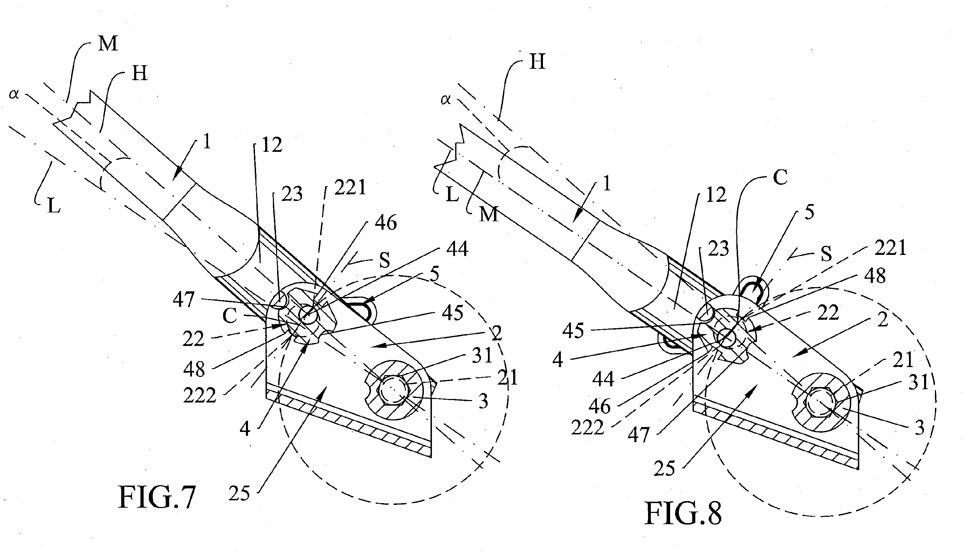

As shown in particular in Figures 7 and 8, when the eccentric washer 4 is in one of said first and second positions of engagement with catch 23, the center of said through hole 44 of the eccentric washer 4 is at the diameter of the upper through hole 22 of the connection bracket 2. The diameter of the upper through hole 22 is along a third axis S. The third axis S lays on a plane identified by the surface of the upper portion 25 of the connection bracket 2 and is transversal to the low L and high H longitudinal axes.

When the eccentric washer 4 is in an disengagement position, handle 1 may rotate about the first axis F having the fulcrum pin 31 as fulcrum, i.e. handle 1 is rotatably connected to the body 101 of the lawnmower by means of the fulcrum pin 31.

Handle 1 may rotate about the first axis F by an angle α having as constraint the bond pin 42, which may move within the upper through hole 22 and along an arc of circumference C, which is described by the third axis S by first approximation, as shown in Figure 7-8.

Handle 1 passes from an upper position, in which the longitudinal axis M of handle 1 coincides with the high longitudinal axis H, to a lower position in which the longitudinal axis M of handle 1 coincides with the low longitudinal axis L.

As shown in Figures 7, 8, in the first and second positions of engagement of the eccentric washer 4, the through hole 44 of the eccentric washer 4 is positioned along the arc of circumference C so that the surface of the bond pin 42 engaged in the upper through hole 22 is in a position of contact against the inner surface of the upper through hole 22 itself.

An upper portion 221 of the inner surface of the through hole 22 and a lower portion 222 of the inner surface of the upper through hole 22 are identified along the third axis S intersecting the arc of circumference C.

As shown in Figure 7, in the first position of engagement of the eccentric washer 4, the surface of the bond pin 42 is engaged in a first position of contact against the upper portion 221 of the inner surface of the through hole 22.

In the first position of engagement of the eccentric washer 4, the center of the through hole 44 of the eccentric washer 4 and the center of the second through hole 14 of handle 1 are on the high longitudinal axis H together with the center of the first through hole 21 of the connection bracket 2 and the center of the first through hole 13 of handle 1.

As shown in Figure 8, in the second position of engagement of the eccentric washer 4, the surface of the bond pin 42 is engaged in a second position of contact against the lower portion 222 of the inner surface of the through hole 22.

In the second position of engagement of the eccentric washer 4, the center of the through hole 44 of the eccentric washer 4 and the center of the second through hole 14 of handle 1 are on the low longitudinal axis L together with the center of the first through hole 21 of the connection bracket 2 and the center of the first through hole 13 of handle 1.

In the position of disengagement of the eccentric washer 4, knob 5 is loosened on the bond pin 42 by a portion such that the eccentric washer 4 is allowed to disengage the first 45 or second 47 recess from catch 23 in order to permit a rotation of handle 1 about the first axis F within the constraint defined by the bond pin 42 present in the upper through hole 22.

With regards to the operation of the handle 1 of lawnmower 10, handle 1 may pass from a high position to a low position by loosening knob 5, rotating the eccentric washer 4 about the second axis R, and rotating handle 1 by the angle α. Knob 5 locks the position of handle 1 once that the eccentric washer 4 passes into at least one of said first or second engagement position.

As shown in Figures 1, 3, 5, 7, in the high position of handle 1, the eccentric washer 4 is in the first position of engagement.

As shown in Figures 2, 4, 6, 8, in the low position of handle 1, the eccentric washer 4 is in the second position of engagement.

To make handle 1 pass from the high position to the low position by making handle 1 travel downwards by the angle α, it is necessary to disengage the eccentric washer 4, i.e. to disengage the second recess 47 of catch 23 by loosening knob 5 by unscrewing it on the bond pin 42, so that the eccentric washer 4 can translate along the second axis R and towards the inner side of lawnmower 10, with respect to the surface of the upper portion 25 of the connection bracket 2.

Once the eccentric washer 4 has been disengaged, the eccentric washer 4 itself is rotated by 180 sexagesimal degrees about the second axis R to make the first recess 45 coincide with catch 23, i.e. by positioning the eccentric washer 4 in the second position of engagement. Knob 5 is screwed again until the bond pin 42 is completely screwed with knob 5, so as to close the connection bracket 2 together with handle 1 advantageously and securely.

Passing from one position of handle 1 to the other is possible by loosening knob 5 and rotating the eccentric washer 4 by an appropriate angle about the second axis R to make catch 23 engage with one of the two recesses 45 or 47, by rotating handle 1 about the fulcrum pin 31 of the angle α and then screwing knob 5 on the bond pin 42 again to make the connection between the handle 1 and the body 101 of lawnmower 10 advantageously solid.

Alternatively, the connection bracket 2 is in one piece with the body 101 of lawnmower 10. In particular, the lower connection portion 20 and the upper portion 25 of the connection bracket 2 are in one piece with the body 101 of lawnmower 10. Here, the upper portion 25 integral with the body 101 of lawnmower 10 comprises the upper through hole 22, the lower through hole 21 and at least one of said catches 23.

In a further alternative, catch 23 is positioned in any location about the upper through hole 22 of the connection bracket 2 so as to operate as a catch for the eccentric washer 4.

A yet further alternative includes a plurality of catches 23 for each recess 45, 47 of the eccentric washer 4 so as to increase the strength and solidity of the connection of handle 1 with the connection bracket 2 in an advantageous manner.

A still further alternative includes a plurality of recesses 45, 47 of the eccentric washer 4 so as to identify a respective plurality of positions of engagement of the eccentric washer 4, and thus correspondingly a plurality of positions of handle 1. Here, in order to make handle 1 pass from at least one position of handle 1 to at least one other position of handle 1, it is necessary to position the eccentric washer 4 in a position of disengagement and rotate the eccentric washer 4 itself by an appropriate angle, which may be different from 180 degrees and until at least one of said plurality of recesses 45, 47 is engaged by at least one of said catches 23.

Advantageously, the handle 1 of the present invention can be easily height-adjusted by disengaging the eccentric washer 4 by loosening knob 5, rotating the eccentric washer 4 and engaging the eccentric washer 4 in at least one of said positions of engagement with catch 23.

Advantageously, in any of the multiple positions of engagement of the eccentric washer 4, handle 1 is safe and well fixed to lawnmower 10 to the extent that it cannot come out from the engagement, and is safe, simple and easy to be industrially implemented.

Advantageously, while mowing the lawn, handle 1 cannot come out from its seat should lawnmower 10 fall into a hole on rough terrain. Indeed, the eccentric washer 4 allows handle 1 to be advantageously connected to the body 101 of lawnmower 10 through the second axis R which, being perpendicular to the surface of the upper portion 25 of the connection bracket 2 and thus transversal to the longitudinal axis M, and as the eccentric washer 4 is synergistically blocked in a position of engagement by at least one of said catches 23, allows the connection between the handle 1 and the body 101 of lawnmower 10 to remain solid and stable in all lawn mowing situations.

At the same time, a further advantage is due to the fact that lawnmower 10 with the handle 1 of the present invention allows to mow the lawn in an optimal, safe manner on all terrain and in any position of handle 1, without the risk of losing the grip on handle 1 and inadvertently risking to lose control of lawnmower 10.

A further advantage is due to the fact that there are no weak parts, such as return springs, to allow handle 1 to pass from one position to another, e.g. between the high position and the low position and vice versa.

## Claims

1. Lawnmower (10) comprising a handle (1) that expands its length along a longitudinal axis (M), comprising two lower ends (12) attached pivotably to a body (101) of the lawnmower (10), said handle (1) being suitable for passing from at least one high position to at least one low position, each of said two lower ends (12) of the handle (1) being rotatably connected with the body (101) of the lawnmower (10) by means of a fulcrum pin (31) and a bond pin (42), said fulcrum pin (31) being pivotable about a first transversal axis (F), and being suitable for enabling a rotation of the handle (1) about the first axis (F), said bond pin (42) being pivotable about a second transversal axis (R), **characterized in that** said bond pin (42) is suitable for pivoting in a through hole (44) of an eccentric washer (4), said eccentric washer (4) comprising at least one recess (45, 47) suitable for engaging with at least one catch (23) integral with the body (101) of the lawnmower (10) to block the eccentric washer (4) in at least one first position of engagement corresponding to said at least one high position of the handle (1) and in at least one second position of engagement corresponding to said at least one low position of the handle (1), said eccentric washer (4) is suitable for passing from said at least one first position of engagement to said at least one second position of engagement by translating along the second axis (R) and by rotating about the second axis (R).

2. Lawnmower (10) according to claim 1, **characterized in that** said eccentric washer (4) in said at least one first position of engagement provides a second recess (47) of said at least one recess (45, 47) engaged in one of said at least one catch (23), said eccentric washer (4) in at least one position of disengagement is suitable for translating along the second axis (R) by disengaging from said at least one catch (23) and it is suitable for rotating about the second axis (R), said eccentric washer (4) in said at least one second position of engagement provides a first recess (45) of said at least one recess (45, 47) being engaged in one of said at least one catch (23).

3. Lawnmower (1) according to anyone of the claims 1 or 2, **characterized in that** said body (101) of the lawnmower (10) comprising an upper through hole (22) with a larger diameter than said through hole (44) of the eccentric washer (4), said bond pin (42) passing through said upper through hole (22), said eccentric washer (4) in said at least one first position of engagement provides that said bond pin (42) is in a first position of contact with an upper portion (221) of an inner surface of the upper through hole (22), said eccentric washer (4) in said at least one second position of engagement provides that said bond pin (42) is in a second position of contact with a lower portion (222) of the inner surface of the upper through hole (22), said eccentric washer (4) in said at least one position of disengagement provides that said bond pin (42) inside the upper through hole (22) follows an arc of circumference (C) with a center in the fulcrum pin (31).

4. Lawnmower (10) according to claim 3, **characterized in that** a connection bracket (2) integral with the body (101) of the lawnmower (1) comprises an upper portion (25) comprising said upper through hole (22).

5. Lawnmower (10) according to anyone of claims 1-4, **characterized in that** a knob (5) is screwed on the bond pin (42) blocking the bond pin (42) in said at least one first or second position of engagement of the eccentric washer (4) blocking the handle (1) in one of said at least one high or low position of the handle (1).

6. Lawnmower (10) according to anyone of claims 3-5, **characterized in that** said upper through hole (22) has a diameter twice of the through hole (44) of the eccentric washer (4).

7. Lawnmower (10) according to anyone of the preceding claims, **characterized in that** said eccentric washer (4) rotating by 180 sexagesimal degree about the second axis (R), passes from said at least one first position of engagement to said at least one second position of engagement.

## Patentansprüche

1. Rasenmäher (10) mit einem Griff (1), der seine Länge entlang einer Längsachse (M) erweitert und der zwei untere Enden (12) umfasst, die schwenkbar an einem Körper (101) des Rasenmähers (10) befestigt sind, wobei der Griff (1) dafür geeignet ist, von mindestens einer hohen Position in mindestens eine niedrige Position überzugehen, wobei jedes der beiden unteren Enden (12) des Griffs (1) mittels eines Gelenkzapfens (31) und eines Verbindungsstiftes (42) drehbar mit dem Körper (101) des Rasenmähers (10) verbunden ist, wobei der Gelenkzapfen (31) um eine erste Querachse (F) schwenkbar ist und dafür geeignet ist, ein Drehen des Griffs (1) um die erste Achse (F) zu ermöglichen, wobei der Verbindungsstift (42) um eine zweite Querachse (R) schwenkbar ist, **dadurch gekennzeichnet, dass** der Verbindungsstift (42) zum Schwenken in einer Durchgangsöffnung (44) einer Exzenterscheibe (4) geeignet ist, wobei die Exzenterscheibe (4) mindestens eine Aussparung (45, 47) umfasst, die zum Angriff an mindestens einer mit dem Körper (101) des Rasenmähers (10) integral gebildeten Klinke (23) geeignet ist, um die Exzenterscheibe (4) in mindestens einer ersten Angriffsposition, die der mindestens einen hohen Position des Griffs (1) entspricht, und in mindestens einer zweiten Angriffsposition, die der mindestens einen niedrigen Position des Griffs (1) entspricht, zu blockieren, wobei die Exzenterscheibe (4) dafür geeignet ist, durch Verlagern entlang der zweiten Achse (R) und durch Drehen um die zweite Achse (R) von der mindestens einen ersten Angriffsposition in die mindestens eine zweite Angriffsposition zu gelangen.

2. Rasenmäher (10) nach Anspruch 1, **dadurch gekennzeichnet, dass** die Exzenterscheibe (4) in der mindestens einen ersten Angriffsstellung eine zweite Aussparung (47) der mindestens einen Aussparung (45, 47) bereitstellt, die mit einer der mindestens einen Klinke (23) in Angriff gelangt, wobei die Exzenterscheibe (4) in mindestens einer Löseposition zum Verlagern entlang der zweiten Achse (R) durch Lösen aus der mindestens einen Sperre (23) geeignet ist und zum Drehen um die zweite Achse (R) geeignet ist, wobei die Exzenterscheibe (4) in der mindestens einen zweiten Angriffsposition eine erste Aussparung (45) der mindestens einen Aussparung (45, 47) bereitstellt, die mit einer der mindestens einen Klinke (23) in Angriff gelangt.

3. Rasenmäher (1) nach einem der Ansprüche 1 oder 2, **dadurch gekennzeichnet, dass** der Körper (101) des Rasenmähers (10) eine obere Durchgangsöffnung (22) mit einem größeren Durchmesser als die Durchgangsöffnung (44) der Exzenterscheibe (4) umfasst, wobei der Verbindungsstift (42) die obere Durchgangsöffnung (22) passiert, wobei die Exzenterscheibe (4) in der mindestens einen ersten Angriffsposition dafür sorgt, dass sich der Verbindungsstift (42) in einer ersten Kontaktposition mit einem oberen Abschnitt (221) einer Innenfläche der oberen Durchgangsöffnung (22) befindet, wobei die Exzenterscheibe (4) in der mindestens einen zweiten Angriffsposition dafür sorgt, dass sich der Verbindungsstift (42) in einer zweiten Kontaktposition mit einem unteren Abschnitt (222) der Innenfläche der oberen Durchgangsöffnung (22) befindet, wobei die Exzenterscheibe (4) in der mindestens einen Löseposition dafür sorgt, dass der Verbindungsstift (42) innerhalb der oberen Durchgangsöffnung (22) einem Umfangsbogen (C) mit einer Mitte in dem Gelenkzapfen (31) folgt.

4. Rasenmäher (10) nach Anspruch 3, **dadurch gekennzeichnet, dass** eine mit dem Körper (101) des Rasenmähers (1) integral gebildet Verbindungshalterung (2) einen oberen Abschnitt (25) umfasst, der die obere Durchgangsöffnung (22) umfasst.

5. Rasenmäher (10) nach einem der Ansprüche 1-4, **dadurch gekennzeichnet, dass** ein Knauf (5) auf den Verbindungsstift (42) aufgeschraubt ist, der den Verbindungsstift (42) in der mindestens einen ersten oder zweiten Angriffsposition der Exzenterscheibe (4) blockiert, so dass der Griff (1) in einer der mindestens einen hohen oder niedrigen Position des Griffs (1) blockiert wird.

6. Rasenmäher (10) nach einem der Ansprüche 3-5, **dadurch gekennzeichnet, dass** die obere Durchgangsöffnung (22) einen Durchmesser aufweist, der doppelt so groß ist wie die Durchgangsöffnung (44) der Exzenterscheibe (4).

7. Rasenmäher (10) nach einem der vorhergehenden Ansprüche, **dadurch gekennzeichnet, dass** die Exzenterscheibe (4), die sich um 180 sexagesimale Grad um die zweite Achse (R) dreht, von der mindestens einen ersten Angriffsposition in die mindestens eine zweite Angriffsposition übergeht.

## Revendications

1. Tondeuse à gazon (10) comprenant une poignée (1) qui fait subir une expansion à sa longueur le long d'une axe longitudinal (M), comprenant deux extrémités inférieures (12) fixées, de manière pivotante, à un corps (101) de la tondeuse à gazon (10), ladite poignée (1) étant appropriée pour passer d'au moins une position haute à au moins une position basse, chacune desdites deux extrémités inférieures (12) de la poignée (1) étant raccordée de manière rotative avec le corps (101) de la tondeuse à gazon (10) au moyen d'une broche de pivot (31) et d'une broche de liaison (42), ladite broche de pivot (31) pouvant pivoter autour d'un premier axe transversal (F) et étant appropriée pour permettre une rotation de la poignée (1) autour du premier axe (F), ladite broche de liaison (42) pouvant pivoter autour d'un second axe transversal (R), **caractérisée en ce que** ladite broche de liaison (42) est appropriée pour pivoter dans un trou débouchant (44) d'une rondelle excentrique (4), ladite rondelle excentrique (4) comprenant au moins un évidement (45, 47) approprié pour se mettre en prise avec au moins un loquet (23) solidaire avec le corps (101) de la tondeuse à gazon (10) pour bloquer la rondelle excentrique (4) dans au moins une première position de mise en prise correspondant à ladite au moins une position haute de la poignée (1) et dans au moins une seconde position de mise en prise correspondant à ladite au moins une position basse de la poignée (1), ladite rondelle excentrique (4) étant appropriée pour passer de ladite au moins une première position de mise en prise à ladite au moins une seconde position de mise en prise en effectuant un mouvement de translation le long du second axe (R) et en tournant autour du second axe (R).

2. Tondeuse à gazon (10) selon la revendication 1, **caractérisée en ce que** ladite rondelle excentrique (4) dans ladite au moins une première position de mise en prise fournit un second évidement (47) dudit au moins un évidement (45, 47) mis en prise dans l'un parmi ledit au moins un loquet (23), ladite rondelle excentrique (4) dans au moins une position de dégagement, est appropriée pour effectuer un mouvement de translation le long du second axe (R) en se dégageant dudit au moins un loquet (23) et elle est appropriée pour tourner autour du second axe (R), ladite rondelle excentrique (4) dans ladite au moins une seconde position de mise en prise fournit un premier évidement (45) dudit au moins un évidement (45, 47) qui est mis en prise dans l'un dudit au moins un loquet (23).

3. Tondeuse à gazon (1) selon l'une quelconque des revendications 1 ou 2, **caractérisée en ce que** ledit corps (101) de la tondeuse à gazon (10) comprenant un trou débouchant supérieur (22) avec un plus grand diamètre que ledit trou débouchant (44) de la rondelle excentrique (4), ladite broche de liaison (42) passant à travers ledit trou débouchant supérieur (22), ladite rondelle excentrique (4) dans ladite au moins une première position de mise en prise prévoit que ladite broche de liaison (42) est dans une première position de contact avec une partie supérieure (221) d'une surface interne du trou débouchant supérieur (22), ladite rondelle excentrique (4) dans ladite au moins une seconde position de mise en prise prévoit que ladite broche de liaison (42) est dans une seconde position de contact avec une partie inférieure (222) de la surface interne du trou débouchant supérieur (22), ladite rondelle excentrique (4) dans ladite au moins une position de dégagement prévoit que ladite broche de liaison (42) à l'intérieur du trou débouchant supérieur (22) suit un arc de circonférence (C) avec un centre dans la broche de pivot (31).

4. Tondeuse à gazon (10) selon la revendication 3, **caractérisée en ce qu'**une console de raccordement (2) solidaire avec le corps (101) de la tondeuse à gazon (1) comprend une partie supérieure (25) comprenant ledit trou débouchant supérieur (22).

5. Tondeuse à gazon (10) selon l'une quelconque des revendications 1 à 4, **caractérisée en ce qu'**un bouton (5) est vissé sur la broche de liaison (42) bloquant la broche de liaison (42) dans ladite au moins une première ou seconde position de mise en prise de la rondelle excentrique (4) qui bloque la poignée (1) dans l'une parmi ladite au moins une position haute ou basse de la poignée (1).

6. Tondeuse à gazon (10) selon l'une quelconque des revendications 3 à 5, **caractérisée en ce que** ledit trou débouchant supérieur (22) a un diamètre représentant deux fois le trou débouchant (44) de la rondelle excentrique (4).

7. Tondeuse à gazon (10) selon l'une quelconque des revendications précédentes, **caractérisée en ce que** ladite rondelle excentrique (4) tournant à 180 degrés sexagésimaux autour du second axe (R), passe de ladite au moins une première position de mise en prise à ladite au moins une seconde position de mise en prise.
